# EUROPEAN PATENT APPLICATION

(11) **EP 4 197 613 A1**
(43) Date of publication of application: **21.06.2023**
(21) Application number: 21215521.2
(22) Date of filing: 17.12.2021
(51) Int. Cl.: B01D 17/06, B03C 11/00, C10G 33/02, B01D 17/12, C10G 33/08

(54) **A METHOD FOR PROTECTING THE COALESCER ELEMENTS OF AN ELECTROSTATIC COALESCER DEVICE AGAINST ELECTRICALLY INDUCED EROSION AND/OR PARTIAL DISCHARGES**

(71) Applicant: Sulzer Management AG, 8401 Winterthur (CH)
(72) Inventor: The designation of the inventor has not yet been filed
(74) Representative: Henkel & Partner mbB

(57) **Abstract**

A method for protecting the coalescer elements of an electrostatic coalescer device against electrically induced erosion and/or partial discharges during the operation of the electrostatic coalescer device comprises the following steps:
a) providing an electrostatic coalescer device comprising a vessel which contains at least two coalescer elements, wherein each coalescer element . comprises an electrode (preferably conductive inner) electrode, which is enclosed by an electrical insulation,
b) feeding a water/oil mixture or a gas/water/oil mixture into the vessel,
c) supplying AC voltage to the electrodes of the at least two coalescer elements, thereby separating the water/oil mixture into an oil phase and a water phase or separating the gas/water/oil mixture into a gas phase, an oil phase and a water phase,
d) time-resolved determining the electrical impedance of the electrode of at least one of the coalescer elements and determining, whether the electrical impedance of the electrode has been changed within a predetermined time period by more than a predetermined threshold and, if so, quenching or reducing the voltage supplied to the electrode to at most 70% of the AC voltage supplied to the electrode at the point of time of determining the change of the electrical impedance of the electrode until the change of the electrical impedance of the electrode lies within a predetermined range and/or until the electrical impedance of the electrode lies within a predetermined range.

## Description

The present invention relates to a method for protecting the coalescer elements of an electrostatic coalescer device against electrically induced erosion and/or partial discharges during the operation of the electrostatic coalescer device and to an electrostatic coalescer device being suitable for conducting the method.

The need to separate water/oil mixtures or gas/water/oil mixtures exists in a plurality of technical fields, such as in oil and gas production facilities, oil refineries, chemical plants, gas plants and supply/distribution installations. For instance, crude oil deposits are often mixed with and/or must be accessed through water so that the recovered raw resource is in fact an emulsion of small water droplets in a continuous crude oil phase, which may further contain more or less gas. The aqueous droplets must be separated from the oil phase, in order to maximize the oil yield and in order to ensure that the crude oil meets product quality specifications. In principle, this separation may be achieved in a settling tank allowing the oil and water phases to separate by gravity based on the different densities of both phases. However, this separation technique is very slow and does not lead to an effective separation in particular in cases where the water droplets dispersed in the oil phase are fine and small. Therefore, the phase separation is typically achieved with a coalescer, which promotes coalescence of the dispersed droplet phase of an emulsion, i.e. an increase of the size of the dispersed droplets resulting from a merger of individual dispersed droplets, thus facilitating the phase separation by gravitation.

One class of such coalescers are mechanical coalescers, which effect the coalescence of the dispersed droplet phase of an emulsion by using physical obstructions to the emulsion flow. For example, a plate angled to the horizontal plane is provided in the coalescers so that the water/oil mixture is guided around the horizontal plane, wherein the dispersed water phase - which is denser than the continuous oil phase - coalesces on the plate and then drips down the slope of the plate towards an outlet.

Another effective class of coalescers are electrostatic coalescers, which generate a high voltage electric field in the emulsion. Because water, in particular salt water, is electrically more conductive than oil, the water droplets dispersed in the continuous oil phase form dipoles attracting each other leading to a coalescence of the water droplets, thus accelerating the phase separation by gravitation. The electrical field is generated by a plurality of high voltage electrodes being provided in the vessel of the electrostatic coalescer, with the electrodes being submerged in the emulsion during the operation of the electrostatic coalescer. Especially in the event of separating water/oil mixtures containing gas and/or high amounts of water in comparison to the amount of oil, it is necessary to electrically insulate any of the high voltage electrodes, which is typically achieved by encasing each electrode with an electrically insulating material, such as an electrically insulating organic compound (for instance a fluorinated polymer) or a composite of inorganic and organic compounds (for instance epoxy composites filled with silica). The encased electrodes are also designated as coalescer elements. Without such an electrical insulation, local formations of water continuous emulsions in the water/oil mixture would cause short circuits between adjacent coalescer elements, in particular in the event of separating a water/oil mixture including high amounts of water, such as 30% by weight of water up to water amounts leading to phase inversion of the water/oil mixture, i.e. into an oil in water emulsion.

However, during the operation of the electrostatic coalescer device the electrically insulating material is subject to electrically induced erosion, which is often caused by partial discharges on or near to the insulating material surface. Partial discharges occur in particular in the presence of gas, since the high voltage electrodes can easily ionize the gas, which as a result causes partial discharges. These partial discharges contain high amounts of energy causing the auxiliary equipment, which energizes the coalescer elements, to shut down or causing damage to the coalescer elements, for instance by breaking down the insulation integrity of the insulating material. Moreover, the inclusion of small amounts of solids, such as in drilling fluids and other non-normal production fluids, in the water/oil mixture or gas/water/oil mixture, respectively, may lead during the operation of the electrostatic coalescer device to a build-up of small lumps containing highly conductivity material that may also lead to partial discharges on or near to the insulating material surface. Again, these partial discharges may erode the insulating material in the near-region and, if the material is soft as in some commonly used insulation materials, such as fluorinated polymers, the erosion can lead to a critical insulation failure within minutes. Other insulation materials, such as epoxy composites filled with silica, can withstand such electrical erosion for a longer period of time, but it still poses as a severe reduction in the expected service life of the insulation material.

On account of these reasons, the high voltage coalescer elements of the current electrostatic coalescer devices have to be exchanged by new ones in comparable short time intervals of one to three years in production streams with a high degree of deposits or fouling, which is not only expensive, but also causes undesired long down times of the electrostatic coalescer devices and related loss in production.

In view of this, the object underlying the present invention is to provide a method for protecting the coalescer elements of an electrostatic coalescer device against electrically induced erosion and/or partial discharges during the operation of the electrostatic coalescer device so as to increase the service life of the coalescer elements and in particular the insulations thereof, thereby extending the length of the time intervals, after which the coalescer elements needs to be exchanged by new ones, without reducing the efficiency of the electrostatic coalescer device.

In accordance with the present invention this object is satisfied by providing a method for protecting the coalescer elements of an electrostatic coalescer device against electrically induced erosion and/or partial discharges during the operation of the electrostatic coalescer device comprising the following steps:
a) providing an electrostatic coalescer device comprising a vessel which contains at least two coalescer elements, wherein each coalescer element comprises a (conductive inner) electrode, which is enclosed by an electrical insulation,
b) feeding a water/oil mixture or a gas/water/oil mixture into the vessel,
c) supplying AC voltage to the electrodes of the at least two coalescer elements, thereby separating the water/oil mixture into an oil phase and a water phase or separating the gas/water/oil mixture into a gas phase, an oil phase and a water phase,
d) time-resolved determining the electrical impedance of the electrode of at least one of the coalescer elements and determining, whether the electrical impedance of the electrode has been changed within a predetermined time period by more than a predetermined threshold and, if so, quenching or reducing the voltage supplied to the electrode to at most 70% of the AC voltage supplied to the electrode at the point of time of determining the change of the electrical impedance of the electrode until the change of the electrical impedance of the electrode lies within a predetermined range and/or until the electrical impedance of the electrode lies within a predetermined range.

This solution bases on the surprising finding that the time-resolved determination of the electrical impedance of the electrodes of the coalescer elements and of an abrupt change of the electrical impedance of any of the electrodes has happened in a comparable short time interval, i.e. by determining whether the electrical impedance has been changed within a predetermined short time period by more than a predetermined threshold, reliably allows to detect a partial discharge at any of the coalescer elements so that by an appropriate response, i.e. quenching or reducing the voltage supplied to the electrode to at most 70% of the AC voltage supplied to the electrode at the point of time of determining the change of the electrical impedance of the electrode until the change of the electrical impedance of the electrode lies within a predetermined range and/or until the electrical impedance of the electrode lies within a predetermined range, a damage of the concerned coalescer element(s) on account of the partial discharge can be reliably avoided. In particular, when only abrupt changes of the electrical impedance, which occur in a comparable short time interval, are considered, the optimal control of the optimal voltage for each electrode of each coalescer element based on the specific conditions around the respective electrode are not negatively affected. This is due to the fact that in the case of a partial discharge or the like, only the concerned coalescer element is switched-off or shut-off, respectively, and only for a very short term, namely the minimum time interval required, until the partial discharge or the like are finished. A self-learning control routine can be used to refine the voltage levels and timing in order to maximize the average output voltage while keeping the partial discharges below an acceptable energy level. The method thus ensures an individual optimization of protection and performance, resulting in a high system performance and longer service life. All in all, the method in accordance with the present invention protects the coalescer elements of the electrostatic coalescer device against electrically induced erosion and partial discharges during the operation of the electrostatic coalescer device so as to increase the service life of the coalescer elements and in particular the electrical insulations thereof, thereby extending the length of the time intervals, after which the coalescer elements needs to be exchanged by new ones, without reducing the efficiency of the electrostatic coalescer device.

According to the present invention, the voltage supplied to the electrode is quenched or reduced, respectively, to at most 70% of the AC voltage supplied to the electrode at the point of time of determining the change of the electrical impedance of the electrode until the change of the electrical impedance of the electrode lies within a predetermined range and/or until the electrical impedance of the electrode lies within a predetermined range, when the time resolved determination of the electrical impedance of the electrode of at least one of the coalescer elements in step d) leads to the result that the electrical impedance of the electrode has been changed within the time period by more than a predetermined threshold. Good results are in particular achieved, when in the case of determining a change of the electrical impedance of the electrode within the predetermined time interval by more than a predetermined threshold the voltage supplied to the electrode is reduced to at most 50%, more preferably to at most 30%, even more preferably to at most 20% and most preferably to at most 10% of the AC voltage supplied to the electrode at the point of time of determining the change of the electrical impedance of the electrode until the change of the electrical impedance of the electrode lies within a predetermined range and/or until the electrical impedance of the electrode lies within a predetermined range. In any case it is preferred that the voltage supplied to the electrode is reduced in step d) to at most 7 kV, more preferably at most 5 kV, yet more preferably at most 1 kV and most preferably to at most 100 V.

In order to reliably avoid that - after the quenching or reduction of the voltage to the electrode after a partial discharge - the voltage to the concerned electrode is increased too fast with a risk of maintaining or reviving the partial discharge, it is suggested in a further development of the idea of the present invention to stepwise increase after step d) the voltage - after the quenching or reduction of the voltage to the electrode after a partial discharge until the change of the electrical impedance of the electrode lies within a predetermined range and/or until the electrical impedance of the electrode lies within a predetermined range -, thereby assuring that the electrical impedance and/or change the electrical impedance lies within the predetermined range. Preferably, the voltage increases from step to step by not more than 70%, preferably by not more than 50%, more preferably by not more than 20% and most preferably by not more than 10% of the voltage supplied at this point of time to the respective electrode. Each step preferably lasts for at most 10 minutes, more preferably for at most 1 minute, even more preferably for at most 10 seconds, yet more preferably for at most 1 second, yet more preferably for at most 500 milliseconds, yet more preferably for at most 100 milliseconds and yet more preferably for at most 50 milliseconds.

According to a particular preferred embodiment of the present invention, in step d) the voltage supplied to the electrode is quenched or reduced to at most 70% of the AC voltage supplied to the electrode at the point of time of determining the change of the electrical impedance of the electrode until the change of the electrical impedance of the electrode lies within a predetermined range, wherein the predetermined range for the change of the electrical impedance is 10 to 1,000%, more preferably 100 to 1,000% and even more preferably 200 to 1,000% of the electrical impedance measured just before the voltage supplied to the electrode is quenched or reduced, respectively, to at most 70% of the AC voltage supplied to the electrode.

In addition thereto or alternatively thereto, in step d) the voltage supplied to the electrode is quenched or reduced to at most 70% of the AC voltage supplied to the electrode at the point of time of determining the change of the electrical impedance of the electrode until the electrical impedance of the electrode lies within a predetermined range, wherein the predetermined range for the electrical impedance is 30 to 1,500 Ω, more preferably 100 to 1,500 Ω and even more preferably 200 to 1,500 Ω.

In order to allow to reliably detect a change and preferably an abrupt change of the electrical impedance of an electrode of any of the coalescer elements, the electrical impedance is preferably determined in step d) in subsequent time intervals, wherein the value for the electrical impedance measured in a time interval is at least temporarily stored until the value for the electrical impedance of a later, such as the next, time interval is measured and both values have been compared, thereby determining, whether the electrical impedance has been changed within the last time period by more than the predetermined threshold. Preferably, the electrical impedance is determined in step d) in overlapping time intervals, each of which having a length of at most 1 second, more preferably of at most 100 milliseconds, even more of at most 50 milliseconds, still more preferably of at most 20 milliseconds, yet more preferably of at most 10 milliseconds, yet more preferably of at most 1 millisecond, yet more preferably of at most 0.1 milliseconds and most preferably of at most 0.05 milliseconds. Further preferably the electrical impedance values determined for each electrode for at least 10 subsequent time intervals, more preferably for at least 25 subsequent time intervals, yet more preferably for at least 50 subsequent time intervals, still more preferably for at least 100 subsequent time intervals and most preferably for at least 250 subsequent time intervals are stored.

In accordance with a particular preferred embodiment of the present invention, the electrical impedance is determined in step d) in subsequent time intervals, each of which having a length of at most 1 second, more preferably of at most 100 milliseconds, even more of at most 50 milliseconds, still more preferably of at most 20 milliseconds, yet more preferably of at most 10 milliseconds, yet more preferably of at most 1 millisecond, yet more preferably of at most 0.1 milliseconds and most preferably of at most 0.05 milliseconds. This allows one to obtain a good time-resolution and to assure a fast and reliably detection of an abrupt change of the electrical impedance, i.e. of a partial discharge at a coalescer element.

In accordance with an alternative embodiment of the present invention, in order to allow to reliably detect a change and preferably an abrupt change of the electrical impedance of an electrode of any of the coalescer elements, the electrical impedance is preferably determined in step d) in overlapping time intervals, wherein the value for the electrical impedance measured in a time interval is at least temporarily stored until the value for the electrical impedance of a later, such as the next, time interval is measured and both values have been compared, thereby determining, whether the electrical impedance has been changed within the last time period by more than the predetermined threshold. Preferably, the electrical impedance values determined for each electrode for at least 10 overlapping time intervals, more preferably for at least 25 overlapping time intervals, yet more preferably for at least 50 overlapping time intervals, still more preferably for at least 100 overlapping time intervals and most preferably for at least 250 overlapping time intervals are stored. Alternatively, a fixed number of time stored values of current and voltage may be used to determine the impedance at a point of time, which is a sliding buffer interval adding a new value and deleting the oldest value for instance at a rate of 74 kHz. This means, that a measurement of the impedance at a rate of 74 kHz is achieved. For instance, the value calculated every 0.05 milliseconds is used.

Accordingly, preferably the length of the predetermined time period in step d), for which the change of the electrical impedance is determined in step d) and compared with the predetermined threshold is preferably at most 1 second, more preferably at most 100 milliseconds, even more at most 50 milliseconds, still more preferably at most 20 milliseconds, yet more preferably at most 10 milliseconds, yet more preferably at most 1 millisecond, yet more preferably at most 0.1 milliseconds and most preferably at most 0.05 milliseconds.

In accordance with a further preferred embodiment of the present invention, it is suggested that the electrical impedance is determined in step d) in subsequent or overlapping time intervals, wherein the lengths of the time intervals are predetermined in relation to the frequency of the voltage supplied at this point of time to the respective electrode(s). Preferably the length(s) of the time interval(s) is/are at least the time period of one cycle of the AC voltage supplied at the point of time of the beginning of the time interval to the respective electrode. Thus, in case of an AC voltage of 1 kHz supplied to the respective electrode, the time interval has preferably a length of at least one millisecond. More preferably, the length(s) of the time interval(s) cover(s) preferably at least 3 cycles, more preferably at least 5 cycles, still more preferably at least 10 cycles, yet more preferably at least 20 cycles, yet more preferably at least 40 cycles and most preferably at least about 67 cycles, such as 100 cycles, of the AC voltage supplied at the point of time of the beginning of the time interval to the respective electrode.

Moreover, it is preferred to determine in step d) the electrical impedance of the electrode(s) of at least one and preferred of all coalescer elements in real time. Preferably, the time difference between the end of the determination of an electrical impedance value and the actual time, in which the electrode of the respective coalescer element had this electrical impedance value, is at most 1 second, more preferably in time intervals having a length of at most 100 milliseconds, even more preferably in time intervals having a length of at most 50 milliseconds, still more preferably in time intervals having a length of at most 20 milliseconds, yet more preferably in time intervals having a length of at most 10 milliseconds, yet more preferably in time intervals having a length of at most 1 millisecond, yet more preferably in time intervals having a length of at most 0.1 milliseconds and most preferably in time intervals having a length of at most 0.05 milliseconds.

The electrical impedance may be determined in step d) by measuring it directly, by calculating it or by determining it indirectly. Good results are for instance obtained, when the electrical impedance of the electrode is determined in step d) by measuring simultaneously the voltage and current of the electrode and by calculating therefrom the electrical impedance in Ω by dividing the measured voltage in Volt by the measured current in Ampere. The lower the measured electrical impedance, the lower the electrical resistance.

Preferably, the predetermined threshold in step d) for the change of the electrical impedance in the time predetermined period is a change of the electrical impedance of at least 0.25%, more preferably of at least 0.50%, even more preferably of at least 0.75%, still more preferably of at least 1.00%, still more preferably of at least 2.00%, still more preferably of at least 5.00% and most still more preferably of at least 10.00%. Again, the length of the predetermined time interval is preferably at most 1 second, more preferably at most 100 milliseconds, even more preferably at most 50 milliseconds, still more preferably at most 20 milliseconds, yet more preferably at most 10 milliseconds, yet more preferably at most 1 millisecond, yet more preferably at most 0.1 milliseconds and most preferably at most 0.05 milliseconds.

In accordance with a particularly preferred embodiment of the present invention, the predetermined threshold in step d) for the change of the electrical impedance in the time period is at least 0.25%, more preferably at least 0.50%, even more preferably at least 0.75%, still more preferably at least 1.00%, still more preferably at least 2.00%, still more preferably at least 5.00% and most still more preferably at least 10.00%, wherein the length of the time period is at most 50 milliseconds. Still more preferably, the predetermined threshold in step d) for the change of the electrical impedance in the time period is at least 0.25%, more preferably at least 0.50%, even more preferably at least 0.75%, still more preferably at least 1.00%, still more preferably at least 2.00%, still more preferably at least 5.00% and most still more preferably at least 10.00%, wherein the length of the time period is at most 20 milliseconds. Still more preferably, the predetermined threshold in step d) for the change of the electrical impedance in the time period is at least 0.25%, more preferably at least 0.50%, even more preferably at least 0.75%, still more preferably at least 1.00%, still more preferably at least 2.00%, still more preferably at least 5.00% and most still more preferably at least 10.00%, wherein the length of the time period is at most 10 milliseconds. Most preferably, the predetermined threshold in step d) for the change of the electrical impedance in the time period is at least 0.25%, more preferably at least 0.50%, even more preferably at least 0.75%, still more preferably at least 1.00%, still more preferably at least 2.00%, still more preferably at least 5.00% and most still more preferably at least 10.00%, wherein the length of the time period is at most 1 millisecond.

Alternatively, the change of the electrical impedance may be determined in step d) indirectly. For instance, in step c) AC voltage with an adaptive frequency is supplied to the electrodes, wherein in step d) the electrical impedance is determined and from the determined electrical impedance the electrical distortion, a change in the phase angle and/or the change in reactive power is/are calculated, and wherein it is concluded in step d) that the electrical impedance has been changed within the time period by more than the predetermined threshold, when the electrical distortion is higher than 5 W, the change in the phase angle is higher than 5° (or higher than 10° or higher than 20°) and/or the change in reactive power is higher than 5 VA. A partial discharge can be mathematically represented as a voltage dependent resistance, which will lead to a non-linear behavior in the equivalent circuit and induce over-harmonics and/or asymmetries in the current signal. The energy in the partial discharge can therefore be measured as the energy in the over-harmonics. Such higher harmonics in the signal are known as distortion and distortion is often caused by non-linear behavior of the system electrical circuit. Therefore, partial discharges will be seen as rapid variations in the transformer electrode impedance and presence of sudden bursts of distortion power.

In accordance with an alternative embodiment of the present invention, in step c) AC voltage with an adaptive frequency is supplied to the electrodes, wherein in step d) the impedance phase angle is measured, and wherein it is concluded in step d) that the electrical impedance has been changed within the time period by more than the predetermined threshold, when the change in the coalescer elements impedance phase angle is higher than 5°.

The conductive inner electrode may be a metal plate.

In accordance with another alternative embodiment of the present invention, in step a) an electrostatic coalescer device is provided, in which each coalescer element comprises a conductive inner electrode and a transformer, wherein the conductive inner electrode and the transformer are fully or partially enclosed by an electrical insulation, wherein AC voltage with an adaptive frequency is supplied to each of the transformers, from which in step c) AC voltage is supplied to the electrode of the coalescer element, wherein the AC voltage being supplied to each transformer has a frequency of 90 to 110% of the combined transformer-electrode resonance frequency, wherein in step d) the impedance phase angle is measured, and wherein it is concluded in step d) that the electrical impedance has been changed within the time period by more than the predetermined threshold, when the change in the coalescer elements impedance phase angle is higher than 5°, more preferably higher than 10° and most preferably higher than 20°.

In accordance with yet another alternative embodiment of the present invention, in step a) an electrostatic coalescer device is provided, in which each coalescer element comprises an electrode plate and a transformer, wherein the conductive inner electrode and the transformer are fully or partially enclosed by an electrical insulation, wherein AC voltage with an adaptive frequency is supplied to each of the transformers, from which in step c) AC voltage is supplied to the electrode of the coalescer element, wherein the AC voltage being supplied to each transformer has a frequency of 90 to 110% of the combined transformer-electrode resonance frequency, wherein in step d) from the determined electrical impedance the electrical distortion, a change in the phase angle and/or the change in reactive power is/are calculated, and wherein it is concluded in step d) that the electrical impedance has been changed within the time period by more than the predetermined threshold, when the electrical distortion is higher than 5 W, the change in the phase angle is higher than 5° and/or the change in reactive power is higher than 5 VA.

In a further development of the idea of the present invention, it is proposed that the electrostatic coalescer device further comprises a controller with an algorithm, wherein the algorithm uses past measurements and controls to further refine the voltage control to achieve the targets of maximizing output voltage while minimizing the measure of partial discharges.

The present invention is not particularly limited concerning the kind of electrical insulation of the coalescer element, as long as it provides the desired electrical insulation and has a required mechanical durability. For instance, the electrical insulation is preferably made of a polymer or composite comprising a polymer and inorganic material and preferably of a polymer being selected from the group consisting of fluorinated polymers, or of a composite being selected from epoxy composites filled with silica, ceramics and arbitrary combinations of two or more of the aforementioned composites.

In a further development of the idea of the present invention, it is suggested that the electrostatic coalescer device further comprises one or more power supplies and one or more frequency converters, which are preferably arranged outside of the vessel, wherein each of the coalescer elements is connected with a frequency converter and each frequency converter is connected with a power supply, and wherein the voltage of each electrode of each of the coalescer elements is individually and time-resolved controlled. While more than one or even all of the frequency converters may be connected with the same power supply, it is preferred that each electrode is connected with its own frequency converter, i.e. each frequency converter is only connected with one electrode. In this connection frequency converter means any device, which is able to convert the frequency of an AC voltage and in particular the frequency of a low voltage AC voltage to another frequency. If one device comprises two or more sub-units, each of which being able to independently from the other sub-units convert the frequency of a power supply to a desired other frequency and to supply this independently to a specific electrode, each sub-unit is considered as own frequency converter. This embodiment is preferred, because it allows to adjust the frequency and voltage value of the AC voltage supplied to each electrode to an optimal value considering the actual environment of the coalescer element comprising the electrode. More specifically, each frequency converter may measure the actual load of the individual electrode, with which it is connected, and provides then an individual voltage/current/frequency to the electrodes depending on the actual situation of the individual electrode. All of the electrodes or coalescer elements, respectively, are surrounded in use in the vessel by liquid, wherein the liquid composition changes over the width of the vessel, changes even more drastically over the height of the vessel and also changes over the time. Also, the temperature and/or pressure may vary over the time. Due to these changes, each electrode or coalescer element, respectively, has a different surrounding and has thus different power and current requirements. Also, the insulation of individual electrodes may be partly damaged influencing the electrical properties. In order to assure that each electrode has the optimal voltage/current/frequency supply during the use, each frequency converter preferably sends an individually calculated voltage/current/frequency based on the actual measurement result of the actual load of the electrode to the electrode, preferably via a transformer as described below. Consequently, in this embodiment in practice nearly every electrode is provided with a different alternating current, i.e. different frequency and/or different voltage and/or different current. Usually, the voltage value supplied to each electrode - except in case of a pending partial discharge - may vary between 1 and 10 kV, such as between 5 and 10 kV. However, since the changes of voltage/current/frequency supply during the use as consequence of variations in the composition, temperature and pressure of the surrounding liquid mixture are much slower than the abrupt change of electrical impedance in case of a partial discharge, the method in accordance with the present invention can reliably distinguish between a case, in which a partial discharge occurs requiring a short-term shutdown of the voltage to the concerned electrode, and a case, in which a small adjustment of the frequency and/or voltage value and/or current value has to be made due to a variation in the composition, temperature and pressure of the surrounding liquid mixture.

In accordance with a further particular preferred embodiment of the present invention, in step a) of the method an electrostatic coalescer device is provided, in which each coalescer element comprises a conductive inner electrode and a transformer, wherein the conductive inner electrode and the transformer are fully or partially enclosed by an electrical insulation. The transformer receives AC voltage from the frequency converter and the transformer supplies AC voltage to the electrode of the coalescer element. This embodiment allows to precisely and reliably adjust to each electrode AC voltage with the optimal frequency, voltage value and current value in dependency from composition, temperature and pressure of the surrounding liquid mixture based on the measurement of the actual load of the individual electrode performed by the connected frequency controller as described above.

The number of coalescer elements in the vessel of the electrostatic coalescer device will depend on the size of the vessel and amount of processed water/oil mixture or gas/water/oil mixture, respectively. For instance, the electrostatic coalescer device may comprise 20 to 400 and more specifically 40 to 200 coalescer elements, which may be arranged in one horizontal row or in two or three or four or five or more horizontal rows being arranged on top of each other. All of the electrodes of the electrostatic coalescer device may be active, i.e. a pair of adjacent two electrodes or electrodes of adjacent coalescer elements, respectively, is supplied with AC voltage having the same frequency, but a potential of the opposite polarity. Alternatively, it is also possible that between two adjacent coalescer elements each grounded conductive plate is arranged so that a high voltage electrical field is set up between a coalescer element and an adjacent conductive grounded plate.

Preferably, in step b) the water/oil mixture or a gas/water/oil mixture is fed into the vessel so that all coalescer elements are submerged in the water/oil mixture or a gas/water/oil mixture. During the operation, a water/oil interface will form. It is preferred that all coalescer elements are arranged at or above the water/oil interface.

In a further preferred embodiment of the present invention, in step d) the electrical impedance of at least 50%, preferably of at least 70%, more preferably of at least 80%, still more preferably of at least 90%, even more preferably of at least 95% and most preferably of all coalescer elements is determined.

Another aspect of the present invention is an electrostatic coalescer device, which comprises:
i) a vessel which contains at least two coalescer elements, wherein each coalescer element comprises a (conductive inner) electrode, which is enclosed by an electrical insulation,
ii) an AC power source for supplying AC voltage to the electrodes of the at least two coalescer elements and
iii) a controller embodied so that it time-resolved determines during the operation of the electrostatic coalescer device the electrical impedance of the electrode of at least one of the coalescer elements and determines, whether the electrical impedance of the electrode has been changed within a predetermined time period by more than a predetermined threshold and, if so, quenches or reduces the voltage supplied to the electrode to at most 70% of the AC voltage supplied to the electrode at the point of time of determining the change of the electrical impedance of the electrode until the change of the electrical impedance of the electrode lies within a predetermined range and/or until the electrical impedance of the electrode lies within a predetermined range.

The vessel may be a vertically extending or horizontally extending vessel, such as a vertically extending pipe.

In a further development of the idea of the present invention it is proposed that the controller is embodied so that - after the quenching or reduction of the voltage to the electrode after a partial discharge until the change of the electrical impedance of the electrode lies within a predetermined range and/or until the electrical impedance of the electrode lies within a predetermined range - the voltage is stepwise increased, until the electrical impedance lies within a predetermined range.

Preferably, the controller is embodied so that the electrical impedance is determined in subsequent or overlapping time intervals having a length of at most 1 second, more preferably in time intervals having a length of at most 100 milliseconds, even more preferably of at most 50 milliseconds, still more preferably of at most 20 milliseconds, yet more preferably of at most 10 milliseconds, yet more preferably of at most 1 millisecond, yet more preferably of at most 0.1 milliseconds and most preferably of at most 0.05 milliseconds. Alternatively to the above embodiment or in addition thereto, it is preferred that the controller is embodied so that the electrical impedance is determined in real time, wherein the time difference between the end of the determination of an electrical impedance value and the actual time, in which the coalescer element had this electrical impedance value, is at most 1 second, more preferably in time intervals having a length of at most 100 milliseconds, even more preferably in time intervals having a length of at most 50 milliseconds, still more preferably in time intervals having a length of at most 20 milliseconds, yet more preferably in time intervals having a length of at most 10 milliseconds, yet more preferably in time intervals having a length of at most 1 millisecond, yet more preferably in time intervals having a length of at most 0.1 milliseconds and most preferably in time intervals having a length of at most 0.05 milliseconds. Alternatively to one or both of the above embodiments or in addition thereto, it is preferred that the controller is embodied so that the value for the electrical impedance measured in a time interval is at least temporarily stored until the value for the electrical impedance of the next time interval is measured, so that both values are compared with each other, and so that it is thereby determined, whether the electrical impedance has been changed within the time period by more than the predetermined threshold.

Good results are in particular obtained, when the controller is embodied so that the electrical impedance of the electrode is determined by measuring the voltage and current of the electrode and by calculating therefrom the electrical impedance.

It is also possible and preferred that the controller is embodied so that at least one of the electrical distortion, the change in the phase angle, the change in reactive power and change in the impedance phase angle is calculated.

In accordance with a preferred embodiment of the present invention, the electrostatic coalescer device further comprises one or more power supplies and one or more frequency converters, which are arranged outside of the vessel, wherein each of the coalescer elements is connected with a frequency converter and each frequency converter is connected with a power supply so that the voltage of each electrode of each of the coalescer elements is individually and time-resolved controlled by the controller.

Preferably, in the aforementioned embodiment each coalescer element comprises a conductive inner electrode and a transformer, wherein the conductive inner electrode and the transformer are fully or partially enclosed by an electrical insulation, wherein the transformer is electrically connected with the frequency converter and the transformer is electrically connected with the electrode of the coalescer element.

Subsequently, the present invention is described by means of illustrative, but not limiting figures, in which:
- Fig. 1: shows a schematic view of an electrostatic coalescer device in accordance with one embodiment of the present invention.
- Fig. 2: shows an electrical schematic sketch of the electrostatic coalescer device shown in figure 1 as seen from the low voltage side and as described in the example.
- Fig. 3: shows the distortion power provided from the voltage source during a partial discharge as described in the example.
- Fig. 4: shows the voltage and current signal from the voltage source, before and during a partial discharge as described in the example.
- Fig. 5: shows the read-out of the distortion power and the water level on the coalescer element as the water level is increased as described in the example.

Subsequently, the present invention is described by means of illustrative, but not limiting example.

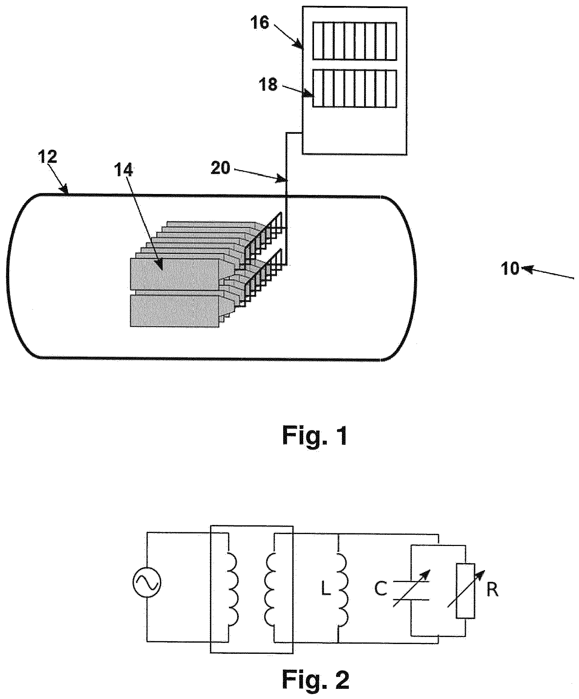

The electrostatic coalescer device 10 shown in figure 1 comprises a vessel 12, which contains a plurality of coalescer elements 14, wherein each coalescer element 14 comprises an electrode, which is enclosed by an electrical insulation. Moreover, the electrostatic coalescer device 10 comprises outside of the vessel 10 AC power sources 16 and frequency converters 18, wherein each of the coalescer elements 14 is connected with a frequency converter 18 and each frequency converter 18 is connected with a power supply 16. From each of the frequency converters 18 a low voltage line 20 leads to an electrode to connect the electrode with the respective frequency converter 18. In addition, the electrostatic coalescer device 10 comprises a controller (not shown), which is embodied so that it time-resolved determines during the operation of the electrostatic coalescer device 10 the electrical impedance of each of the electrodes of the coalescer elements 14 and determines for any of the electrodes, whether the electrical impedance of the electrode has been changed within a time period by more than a predetermined threshold and, if so, quenches or reduces the voltage supplied to the electrode to at most 70% of the AC voltage supplied to the electrode at the point of time of determining the change of the electrical impedance of the electrode until the change of the electrical impedance of the electrode lies within a predetermined range and/or until the electrical impedance of the electrode lies within a predetermined range. All in all, the voltage of each electrode of each of the coalescer elements 14 is individually and time-resolved controlled.

### Example 1

An experimental set-up was developed to test the performance of the method and electrostatic coalescer device in accordance with the present invention. The performance is given both by the sensitivity in detecting partial discharges and also by normal variations in the equipment electrical impedance.

An electrical schematic sketch of the electrostatic coalescer device shown in figure 1 as seen from the low voltage side is shown in figure 2. It comprises on the left a voltage source and in the middle and on the right a high voltage coalescer element comprising a transformer and an electrode, both being encased in an electrical insulation. The transformer has an inductance L and the electrode has a variable resistance R and variable capacitance C. Here, the transformer turn ratio is incorporated in the values of the inductor, capacitor and resistor. The capacitor and the resistor are time varying, while the inductor is constant. The inductor represents the inductance in the transformer and as such is constant in time. The capacitor and the resistor will vary during operation of the electrostatic coalescer device. They will depend on the amount of water in the water-oil emulsion, the temperature of the emulsion, the water drop-out of the emulsion among others. All of the said time variation will have a time scale of minutes.

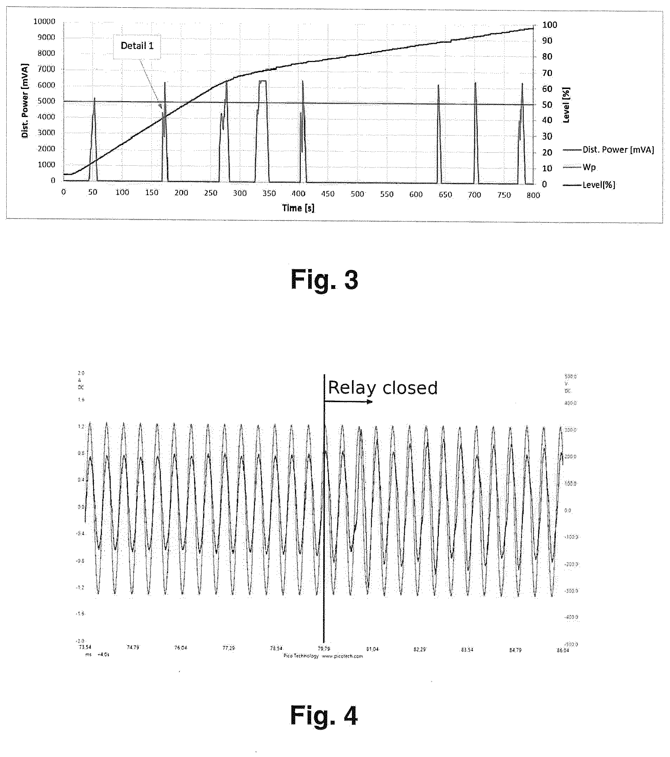

The formation of a partial discharge will also affect the values of the capacitor and the resistor. The variations are a function of the energy released in the partial discharge. The variations in the capacitor and resistor related to these discharges has a time scale smaller than seconds. As described above, in order to have a protection method and device that protects the equipment efficiently while not rendering it in idle position, one needs to have a device that does not react to changes on time scales of minutes, but reacts to variations with time scales shorter than seconds, much like a low-pass filter in electronics. And as with any low-pass filter, high frequency noise below a certain energy level is not detectable. This energy-trigger level will be denoted by Wp and is measured in [VA]. The first set of experiments was conducted to test the consistency in detecting rapid variations in the time scale of seconds in the electrical impedance by interrogating the reactive power of the system. The set-up consisted of a real size VIEC^{™} high voltage electrode (distributed by Sulzer Chemtech AG, Winterthur) and series connected discharge chamber. The design of the discharge chamber set-up was so that the energy released in the discharges could be controlled. The discharges were activated by a high-voltage relay. The results are shown in figure 3, in which the distortion power provided from the voltage source during a partial discharge is shown in dependency of the time. When the distortion power was above the set value, Wp, a discharge event was registered. The trials showed a 100% consistency in detecting rapid changes in reactive power above the limit of Wp.

Figure 4 shows the electrical voltage and current signals just before and during a partial discharge (i.e. relay closed), when the discharge is initiated as indicated in figure 3 at the position marked highlighted "Detail 1". The red line shows the voltage signal, while the blue line shows the current signal.

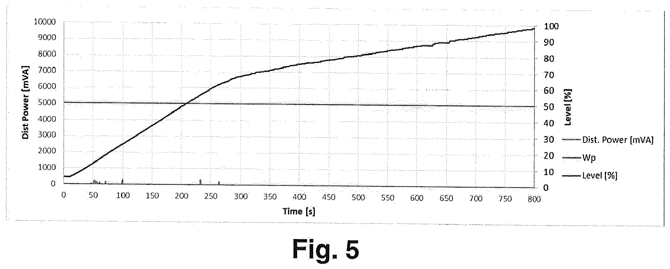

The next set of experiments proved that normal operational variations in the time scales of minutes would pass without causing a trigger event in the program. These variations were simulated with use of the actually commercially distributed VIEC^{™} high voltage plates and varying the water level on the plates and the water content in the emulsion. Figure 5 shows the read-out of the distortion power and the water level on the coalescer element as the water level is increased. The change in water level induced changes in the element capacitance and resistance. It can be seen from the readout that those changes do not create any significant amount of distortion power.

All in all, the experiments have shown that the method and electrostatic coalescer device in accordance with the present invention allow for the detection of partial discharges and not produce triggers when normal changes in operating conditions occur. This allows for an implementation of a self-learning algorithm that reduces the voltage when it needs to while maximizing the operating time at high voltage.

### Reference Numerals

- 10: Electrostatic coalescer device
- 12: Vessel
- 14: Coalescer element
- 16: AC power source
- 18: Frequency converter
- 20: Low voltage line

## Claims

1. A method for protecting the coalescer elements (14) of an electrostatic coalescer device (10) against electrically induced erosion and/or partial discharges during the operation of the electrostatic coalescer device (10) comprising the following steps:
a) providing an electrostatic coalescer device (10) comprising a vessel (12) which contains at least two coalescer elements (14), wherein each coalescer element (14) comprises an electrode, which is enclosed by an electrical insulation,
b) feeding a water/oil mixture or a gas/water/oil mixture into the vessel (12),
c) supplying AC voltage to the electrodes of the at least two coalescer elements (14), thereby separating the water/oil mixture into an oil phase and a water phase or separating the gas/water/oil mixture into a gas phase, an oil phase and a water phase,
d) time-resolved determining the electrical impedance of the electrode of at least one of the coalescer elements (14) and determining, whether the electrical impedance of the electrode has been changed within a predetermined time period by more than a predetermined threshold and, if so, quenching or reducing the voltage supplied to the electrode to at most 70% of the AC voltage supplied to the electrode at the point of time of determining the change of the electrical impedance of the electrode until the change of the electrical impedance of the electrode lies within a predetermined range and/or until the electrical impedance of the electrode lies within a predetermined range.

2. The method in accordance with claim 1, wherein after step d) the voltage is stepwise increased, wherein preferably the voltage is increased from step to step by not more than 50%, more preferably by not more than 20% and most preferably by not more than 10% of the voltage supplied at this point of time to the electrode.

3. The method in accordance with claim 1 or 2, wherein in step d) the electrical impedance is determined in subsequent or overlapping time intervals, wherein the value for the electrical impedance measured in a time interval is at least temporarily stored until the value for the electrical impedance of the next time interval is measured and both values have been compared, thereby determining, whether the electrical impedance has been changed within the time period by more than the predetermined threshold, wherein the electrical impedance is determined in step d) in one or more time intervals each of which having a length of at most 1 second, preferably in time intervals having a length of at most 100 milliseconds, more preferably in time intervals having a length of at most 50 milliseconds, still more preferably in time intervals having a length of at most 20 milliseconds, yet more preferably in time intervals having a length of at most 10 milliseconds, yet more preferably in time intervals having a length of at most 1 millisecond, yet more preferably in time intervals having a length of at most 0.1 milliseconds and most preferably in time intervals having a length of at most 0.05 milliseconds.

4. The method in accordance with any of the preceding claims, wherein the electrical impedance of the electrode is determined in step d) by measuring the voltage and current of the electrode and by calculating therefrom the electrical impedance.

5. The method in accordance with any of the preceding claims, wherein the predetermined threshold in step d) for the change of the electrical impedance in the time period is a change of the electrical impedance of at least 0.25%, preferably of at least 0.50%, more preferably of at least 0.75%, yet more preferably of at least 1.00%, still more preferably of at least 2.00%, still more preferably of at least 5.00% and most still more preferably of at least 10.00%, wherein the change of the electrical impedance is preferably determined by comparing numeric values of the electrical impedance measured in two subsequent or overlapping time intervals.

6. The method in accordance with any of the preceding claims, wherein in step c) AC voltage with a predetermined frequency is supplied to the electrodes, wherein in step d) from the determined electrical impedance the electrical distortion, a change in the phase angle and/or the change in reactive power is/are calculated, and wherein it is concluded in step d) that the electrical impedance has been changed within the time period by more than the predetermined threshold, when the electrical distortion is higher than 5 W, the change in the phase angle is higher than 5° and/or the change in reactive power is higher than 5 VA.

7. The method in accordance with any of the preceding claims, wherein the electrostatic coalescer device (10) further comprises one or more power supplies (16) and one or more frequency converters (18), which are preferably arranged outside of the vessel (12), wherein each of the coalescer elements (14) is connected with a frequency converter (18) and each frequency converter (18) is connected with a power supply (16), and wherein the voltage of each electrode of each of the coalescer elements (14) is individually and time-resolved controlled.

8. The method in accordance with claim 7, wherein in step a) an electrostatic coalescer device (10) is provided, in which each coalescer element (14) comprises a conductive inner electrode and a transformer, wherein the conductive inner electrode and the transformer are fully or partially enclosed by an electrical insulation, wherein the transformer receives AC voltage from the frequency converter (18) and wherein the transformer supplies AC voltage to the electrode of the coalescer element (14).

9. The method in accordance with any of the preceding claims, wherein in step b) the water/oil mixture or a gas/water/oil mixture is fed into the vessel (12) so that all coalescer elements (14) are submerged in the water/oil mixture or a gas/water/oil mixture.

10. The method in accordance with any of the preceding claims, wherein in step d) the electrical impedance of at least 50%, preferably of at least 70%, more preferably of at least 80%, still more preferably of at least 90%, even more preferably of at least 95% and most preferably of all coalescer elements (14) is determined.

11. An electrostatic coalescer device (10) comprising:
i) a vessel (12) which contains at least two coalescer elements (14), wherein each coalescer element (14) comprises an electrode, which is enclosed by an electrical insulation,
ii) an AC power source (16) for supplying AC voltage to the electrodes of the at least two coalescer elements (14) and
iii) a controller embodied so that it time-resolved determines during the operation of the electrostatic coalescer device (10) the electrical impedance of the electrode of at least one of the coalescer elements (14) and determines, whether the electrical impedance of the electrode has been changed within a time period by more than a predetermined threshold and, if so, quenches or reduces the voltage supplied to the electrode to at most 70% of the AC voltage supplied to the electrode at the point of time of determining the change of the electrical impedance of the electrode until the change of the electrical impedance of the electrode lies within a predetermined range and/or until the electrical impedance of the electrode lies within a predetermined range.

12. The electrostatic coalescer device (10) in accordance with claim 11, wherein the controller is embodied so that the electrical impedance is determined in subsequent or overlapping time intervals so that the electrical impedance is determined in real time, wherein the time difference between the end of the determination of an electrical impedance value and the actual time, in which the coalescer element (14) had this electrical impedance value, is at most 1 second, more preferably in time intervals having a length of at most 100 milliseconds, even more preferably of at most 50 milliseconds, still more preferably of at most 20 milliseconds, yet more preferably of at most 10 milliseconds, yet more preferably of at most 1 millisecond, yet more preferably of at most 0.1 milliseconds and most preferably of at most 0.05 milliseconds, so that the value for the electrical impedance measured in a time interval is at least temporarily stored until the value for the electrical impedance of the next time interval is measured, so that both values are compared with each other, and so that it is thereby determined, whether the electrical impedance has been changed within the time period by more than the predetermined threshold.

13. The electrostatic coalescer device (10) in accordance with claim 11 or 12, wherein the controller is embodied so that the electrical impedance of the electrode is determined by measuring the voltage and current of the electrode and by calculating therefrom the electrical impedance.

14. The electrostatic coalescer device (10) in accordance with any of claims 11 to 13, wherein the controller is embodied so that at least one of the electrical distortion, the change in the phase angle, the change in reactive power and change in the impedance phase angle is calculated.

15. The electrostatic coalescer device (10) in accordance with any claims 11 to 14, wherein the electrostatic coalescer device (10) further comprises one or more power supplies (16) and one or more frequency converters (18), which are arranged outside of the vessel (12), wherein each of the coalescer elements (14) is connected with a frequency converter (18) and each frequency converter (18) is connected with a power supply (16) so that the voltage of each electrode of each of the coalescer elements (14) is individually and time-resolved controlled by the controller, wherein each coalescer element (14) comprises a conductive inner electrode and a transformer, wherein the conductive inner electrode and the transformer are fully or partially enclosed by an electrical insulation, wherein the transformer is electrically connected with the frequency converter (18) and the transformer is electrically connected with the electrode of the coalescer element (14).
